# EUROPÄISCHE PATENTSCHRIFT

(11) **EP 1 729 944 B1**
(45) Veröffentlichungstag und Bekanntmachung des Hinweises auf die Patenterteilung: **14.01.2009**
(21) Anmeldenummer: 05700030.9
(22) Anmeldetag: 02.02.2005
(51) Int. Cl.: B29B 17/00, B29B 13/10, B02C 18/12, B02C 18/18, B02C 13/16

(54) **VORRICHTUNG ZUM AUFBEREITEN VON KUNSTSTOFFMATERIAL**
DEVICE FOR PREPARING PLASTIC MATERIAL
DISPOSITIF POUR TRAITER UNE MATIERE PLASTIQUE

(30) Priorität: 17.03.2004 AT 4662004
(43) Veröffentlichungstag der Anmeldung: 13.12.2006
(73) Patentinhaber: EREMA Engineering Recycling Maschinen und Anlagen Gesellschaft m.b.H., 4052 Ansfelden-Linz (AT)
(72) Erfinder: BACHER, Helmut, A-4490 St. Florian (AT); SCHULZ, Helmuth, A-4020 Linz (AT); WENDELIN, Georg, A-4033 Linz (AT); FEICHTINGER, Klaus, A-4040 Linz (AT)
(74) Vertreter: Wildhack, Helmut
(86) Internationale Anmeldenummer: PCT/AT2005/000031
(87) Internationale Veröffentlichungsnummer: WO 2005/087474

(56) Entgegenhaltungen:
- EP-A- 0 625 373
- WO-A-00/74912
- WO-A-03/103915
- DE-A- 2 432 345
- DE-A- 2 844 164

## Beschreibung

Die Erfindung bezieht sich auf eine Vorrichtung zum Aufbereiten von, insbesondere thermoplastischem, Kunststoffmaterial, mit einem Aufnahmebehälter für das zu bearbeitende Material, in dessen Innenraum auf einer Trägerscheibe angeordnete Werkzeuge vorgesehen sind, die durch eine in den Innenraum hineingeführte Welle zum Umlauf um die, insbesondere ,vertikale, Achse der Welle angetrieben sind, und mit zumindest einer Schnecke zum Abtransport des Materiales aus dem Aufnahmebehälter, wobei das Schneckengehäuse eine Einzugsöffnung aufweist, die in Strömungsverbindung steht mit einer Austragsöffnung des Aufnahmebehälters, die tiefer liegt als die Trägerscheibe und die von ihr getragenen Werkzeuge, und wobei im Aufnahmebehälter unterhalb der Trägerscheibe weitere bewegte Werkzeuge vorgesehen sind, die das Material in die Austragsöffnung fördern.

Eine solche, aus WO 00/74912 A1 bekannte Vorrichtung hat sich für die Aufbereitung, insbesondere thermoplastischen, Kunststoffmateriales sehr bewährt, jedoch hat es sich herausgestellt, dass es mitunter zur Einsperrung flüchtiger, aus dem bearbeiteten Material abgegebener Stoffe im Raum unter der Trägerscheibe kommt. Nicht immer können diese flüchtigen Substanzen durch den zwischen dem Rand der Trägerscheibe und der Innenwand des Aufnahmebehälters bestehenden Ringspalt nach oben entweichen, zumal ja durch diesen Ringspalt das zu bearbeitende Material von oben nach unten durchtritt. Besonders unangenehm ist es, wenn die flüchtigen Stoffe mit dem bearbeiteten Material aus dem Aufnahmebehälter abtransportiert werden und in den direkt oder indirekt an den Aufnahmebehälter angeschlossenen Extruder gelangen, da dann die Gefahr besteht, dass im extrudierten Material Gaseinschlüsse unterschiedlicher Art vorhanden sind, was die Qualität des am Extruderausgang erhaltenen Materials wesentlich herabsetzt. Diese Gefahr kann auch durch eine zumeist im Extruder vorgesehene Entgasungseinrichtung nicht völlig beseitigt werden. Zudem sind solche flüchtige Substanzen zumeist nicht von vornherein zu vermeiden, denn es handelt sich um Wasserdampf, Abspaltprodukte des zu bearbeitenden Materials, gasförmige oder verdampfte Kühlmittelanteile usw. Insbesondere bei feuchtem in den Aufnahmebehälter eingebrachten Kunststoffmaterial können diese flüchtigen Substanzanteile erheblich sein.

Die Erfindung setzt sich zur Aufgabe, diese Nachteile zu vermeiden und das durch die Austragsöffnung des Aufnahmebehälters abgeführte Material mit geringem Aufwand zumindest im wesentlichen frei von den erwähnten flüchtigen Substanzen zu machen. Die Erfindung löst diese Aufgabe dadurch, dass die Trägerscheibe zumindest einen nahe der Achse und nahe den beim Umlauf der Trägerscheibe nachlaufenden Ränder der Werkzeuge angeordneten Durchbruch aufweist, welcher den Raum ober ihr mit dem Raum unter ihr verbindet. Durch diesen Durchbruch können die im Raum unter der Trägerscheibe befindlichen oder dort erst entstehenden flüchtigen Stoffe nach oben durch die Trägerscheibe hindurch in den Raum ober ihr entweichen, wo sie unschädlich sind und von wo sie gegebenenfalls entweichen können. Hiebei hat es sich durch Versuche ergeben, dass nahe der Achse angeordnete Durchbrüche besser wirksam sind als achsfern angeordnete Durchbrüche. Solche achsfem angeordnete Durchbrüche sind aus EP 625.373 A2 oder DE 28 44 164 A bekannt, dienen jedoch dort zum Durchtritt zerkleinerten Materiales vom Raum oberhalb der Scheibe zum Raum unter ihr. Im Gegensatz dazu nutzen die erfindungsgemäßen nahe den beim Umlauf der Trägerscheibe nachlaufenden Ränder der Werkzeuge angeordneten Durchbrüche die von den umlaufenden Werkzeugen hervorgerufene Saugwirkung dazu aus, die erwähnten flüchtigen Substanzen aus dem Raum unter der Trägerscheibe abzusaugen.

Gemäß einer Weiterbildung der Erfindung ist es zweckmäßig, zumindest einen der Durchbrüche mit Wänden auszubilden, die zur Richtung der Achse und zur Ebene der Trägerscheibe geneigt verlaufen. Dies wirkt einem Durchfallen des im Raum oberhalb der Scheibe befindlichen Gutes nach unten durch die Trägerscheibe hindurch entgegen. Eine ähnliche Wirkung kann im Rahmen der Erfindung durch eine zumindest für einen der Durchbrüche vorgesehene Abdeckung erzielt werden, welche den Durchbruch rundum bis auf eine zum Umfang der Trägerscheibe weisende Öffnung abdeckt.

Die Größe der Durchbrüche hängt ab von der Menge der abzuführenden flüchtigen Stoffe. Es hat sich durch Versuche herausgestellt, dass es ausreicht, die Querschnittsfläche aller Durchbrüche maximal so groß zu bemessen wie die Querschnittsfläche aller Schnecken eines mit der Austrittsöffnung des Aufnahmebehälters in Strömungsverbindung stehenden Extruders.

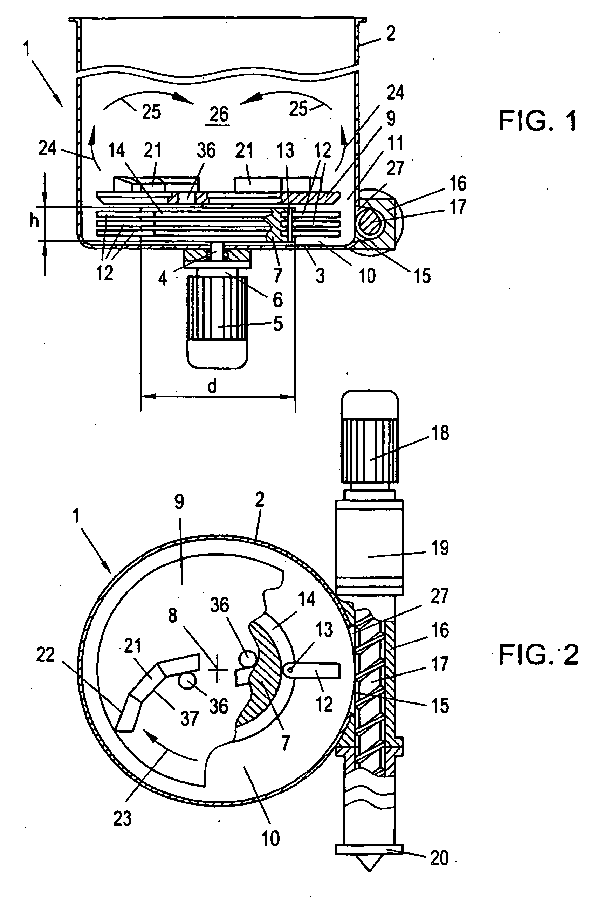

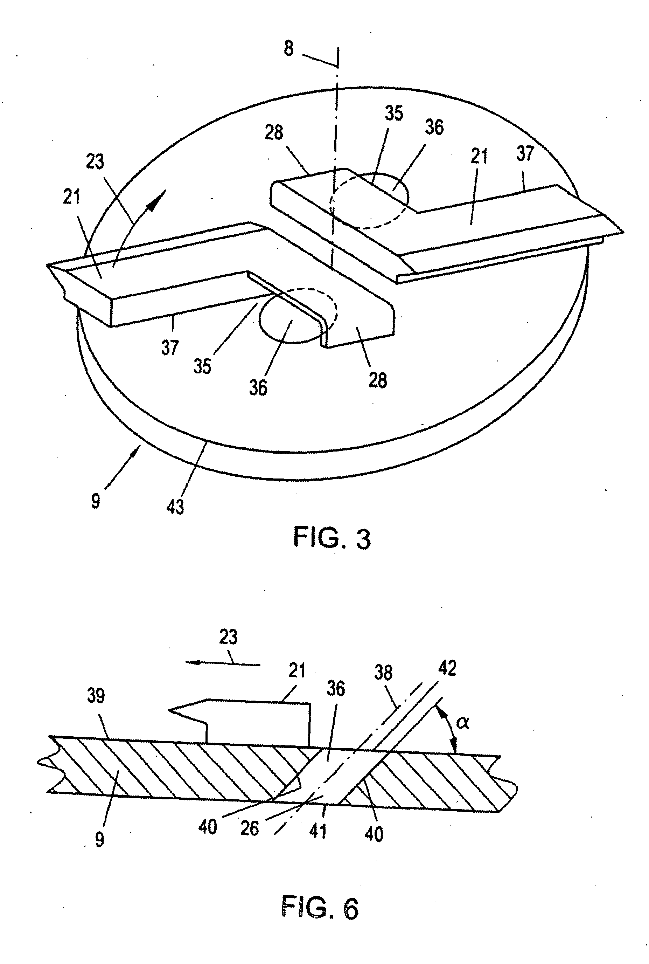

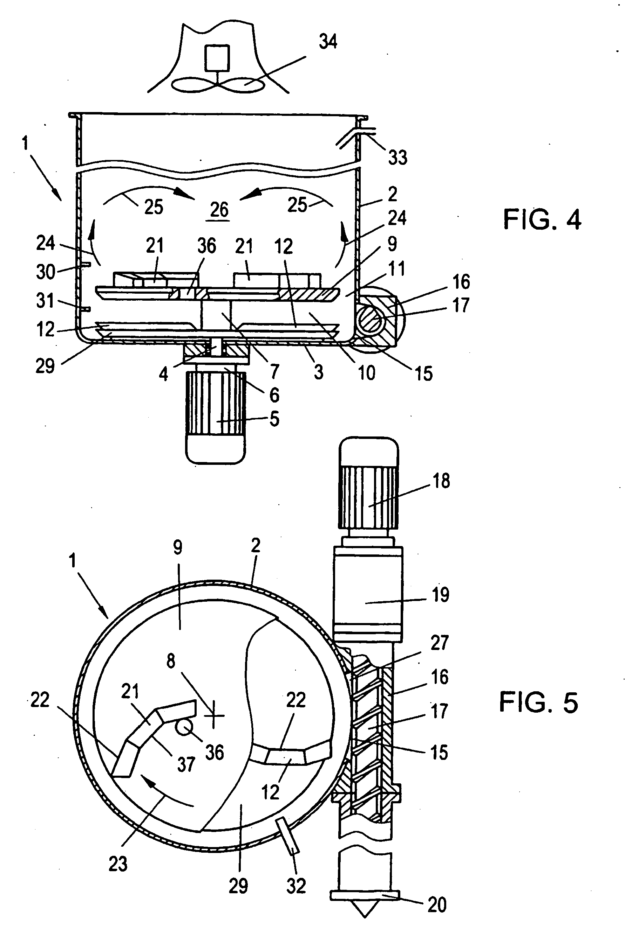

Weitere Kennzeichen und Vorteile der Erfindung ergeben sich aus der Beschreibung von Ausführungsbeispielen des Erfindungsgegenstandes, welche in der Zeichnung schematisch dargestellt sind. Fig. 1 zeigt einen Vertikalschnitt durch ein erstes Ausführungsbeispiel. Fig. 2 zeigt eine Draufsicht zu Fig. 1, teilweise im Schnitt, Fig. 3 zeigt axonometrisch die Ausbildung von Abdeckungen für die Durchbrüche. Fig. 4 zeigt ein weiteres Ausführungsbeispiel im Vertikalschnitt. Fig. 5 ist eine Draufsicht zu Fig. 4, teilweise im Schnitt und Fig. 6 zeigt ein Detail im Vertikalschnitt durch die Trägerscheibe.

Bei der Ausführungsform nach den Fig. 1 und 2 hat die Vorrichtung einen Aufnahmebehälter 1 für das zu verarbeitende, insbesondere thermoplastische, Kunststoffmaterial, das in diesen Behälter 1 von oben mittels einer nicht dargestellten Fördereinrichtung, z.B. eines Förderbandes, eingebracht wird. Das zugeführte Kunststoffmaterial kann vorzerkleinert und/oder vorgetrocknet sein. Der Aufnahmebehälter 1 ist topfförmig mit vertikalen Seitenwänden 2 und hat einen ebenen Boden 3 mit Kreisquerschnitt. Eine Welle 4 durchsetzt, abgedichtet gelagert, den Boden 3 und hat eine vertikale Achse 8, die mit der Behälterachse zusammenfällt. Die Welle 4 ist durch einen unterhalb des Bodens 3 angeordneten Motor 5 mit Getriebe 6 zur Drehbewegung angetrieben. Im Behälter 1 sind mit der Welle 4 ein Rotor 7 und eine darüber angeordnete Trägerscheibe 9 drehschlüssig verbunden. Der Rotor 7 ist von einem kreiszylindrischen Block gebildet, dessen axiale Erstreckung h wesentlich größer ist als jene der flachen Trägerscheibe 9, dessen radiale Erstreckung d jedoch wesentlich kleiner ist als jene der Trägerscheibe 9. Auf diese Weise wird unterhalb der Trägerscheibe 9 ein freier Raum 10 gebildet, der mit dem oberhalb der Trägerscheibe 9 befindlichen Raum 26 des Behälters 1 über einen Ringspalt 11 in freier Strömungsverbindung für das bearbeitete Material steht, der zwischen dem Umfang der Trägerscheibe 9 und der Seitenwand 2 des Behälters 1 besteht. Durch diesen freien Ringspalt 11 kann das behandelte Kunststoffgut aus dem Raum 26 ungehindert in den ringförmigen Raum 10 gelangen. Die Trägerscheibe 9 trägt an ihrer Deckfläche fest angeordnete Werkzeuge 21, welche das im Raum 26 des Behälters 1 befindliche Material mischen und/oder zerkleinern und/oder erwärmen. Für eine wirksame Zerkleinerung sind die Werkzeuge 21 mit Schneidkanten 22 ausgebildet, die entgegen der Umlaufrichtung der Trägerscheibe 9 (Pfeil 23) gekrümmt oder abgewinkelt (Fig. 2) ausgebildet sein können, um einen ziehenden Schnitt zu erreichen. Im Betrieb ergibt sich beim Umlauf der Trägerscheibe durch den Einfluss der Werkzeuge 21 ein Umlauf der in den Behälter 1 eingebrachten Kunststoffmasse, wobei das bearbeitete Material entlang der Seitenwand 2 des Behälters 1 im Raum 26 hochsteigt (Pfeile 24) und im Bereich der Behälterachse wieder nach unten zurückfällt (Pfeile 25). Die so entstehende Mischtrombe durchwirbelt das eingebrachte Material, sodass ein guter Mischeffekt erzielt wird. Ein geringer Anteil des in den Behälter 1 eingebrachten, und dort erforderlichenfalls zerkleinerten Materials gelangt durch den Ringspalt 11 durch in den unterhalb der Trägerscheibe 9 liegenden Raum 10 und wird dort durch weitere Werkzeuge 12 bearbeitet, die am Rotor 7 mittels vertikaler Bolzen 13 in Ringnuten 14 des Rotors 7 schwenkbar befestigt sind, sodass diese Werkzeuge um die Achsen der Bolzen 13 frei pendeln können. Die freien Enden der Werkzeuge 12 liegen im Abstand von der Seitenwand 2 des Behälters 1. Diese weiteren Werkzeuge 12 bewirken durch ihre Schlagwirkung eine zusätzliche Mischung und/oder Zerkleinerung und/oder Erwärmung des im Raum 10 befindlichen Materials. Durch die von diesen Werkzeugen 12 auf das Material ausgeübte Fliehkraft wird das Material in eine Austragsöffnung 15 des Behälter 1 befördert, welche auf der Höhe der zusätzlichen Werkzeuge 12 liegt und den Raum 10 des Behälters 1 mit einer Einzugsöffnung 27 eines Schneckengehäuses 16 verbindet, in welchem eine Schnecke 17 drehbar gelagert ist, die an ihrem einen Stirnende durch einen Motor 18 mit Getriebe 19 zur Drehbewegung angetrieben ist und das ihr zugeführte Kunststoffmaterial am anderen Stirnende, z.B. durch einen Extruderkopf 20, ausdrückt. Es kann sich um eine Einfachschnecke oder um eine Doppelschnecke handeln. Wie ersichtlich, ist das Schneckengehäuse 16 annähernd tangential an den Behälter angeschlossen, so dass Umlenkungen des durch die Schnecke 16 plastifizierten Kunststoffmaterials im Bereich seines Austrittes aus dem Gehäuse 16 vermieden sind.

Stattdessen kann die Schnecke 17 auch eine reine Förderschnecke sein, welche das im Behälter 1 aufbereitete Material der weiteren Verwendung führt, z.B. einem Extruder.

Im Betrieb stellt sich nach einer kurzen Einlaufzeit ein Gleichgewichtszustand ein zwischen dem von der Schnecke abtransportierten Material und dem durch den Ringspalt 11 von oben in den Raum 10 eintretenden Material. Dies hat zur Folge, dass es sehr unwahrscheinlich ist, dass ein in den Behälter 1 eingebrachtes Kunststoffteilchen in das Schneckengehäuse 16 gelangt, ohne zuvor eine ausreichende Verweilzeit im Behälter 1 verbracht zu haben. Dadurch wird eine genügende Bearbeitung aller Kunststoffteilchen durch die Werkzeuge 12, 21 sichergestellt, sodass das von der Schnecke 17 abgeführte Material eine zumindest annähernd gleichmäßige Beschaffenheit aufweist, insbesondere hinsichtlich der Temperatur und der Größe der Kunststoffteilchen. Dies bedeutet, dass die von der Schnecke 17 oder der angeschlossenen Extruderschnecke aufzubringende Plastifizierarbeit vergleichsweise gering ist, sodass hohe thermische Spitzenbeanspruchungen auf das Kunststoffmaterial bei der Plastifizierarbeit entfallen. Dadurch wird das Kunststoffmaterial geschont und an Antriebsenergie für die Schnecke 17 bzw. die Extruderschnecke wesentlich gespart.

Wie erwähnt, ist das in den Behälter 1 eingebrachte Material in der Regel nicht völlig trocken und/oder es weist Verunreinigungen auf, die bei der Verarbeitung im Behälter flüchtige Substanzen abgeben, z.B. Wasserdampf, Abspaltprodukte aus dem bearbeitenden Material, verdampftes Kühlmittel, flüchtige Substanzen aus Einfärbungs- und/oder Bedruckungsmaterial usw. Um zu vermeiden, dass diese flüchtigen Substanzen sich im Raum 10 unter der Trägerscheibe 9 ansammeln und dadurch den Durchtritt von bearbeiteten Material aus dem Raum 26 in den Raum 10 behindern und/oder in das Innere des Schneckengehäuses 16 gelangen, hat die Trägerscheibe 9 mindestens einen, vorzugsweise jedoch mehrere Durchbrüche 36, welche den Raum 26 oberhalb der Trägerscheibe 9 mit dem unter ihr befindlichen Raum 10 verbinden. Durch diese Durchbrüche 36 können die im Raum 10 eingesperrten flüchtigen Substanzen durch die Trägerscheibe 9 hindurch nach oben entweichen und so aus dem Behälter 10 herauskommen oder, etwa durch eine Absaugung 34 (Fig. 4), abgeführt werden.

Diese Durchbrüche können von in einem Querschnitt kreisförmigen Bohrungen gebildet sein. Zumindest einige dieser Durchbrüche 36 sind nahe der Achse 8 des Behälters 1 angeordnet, und zwar unmittelbar hinter den Werkzeugen 21, so dass die Durchbrüche 36, gesehen in Umlaufrichtung (Pfeil 23) der Trägerscheibe 9, den nachlaufenden Rändern 37 bzw. Kanten der Werkzeuge 21 benachbart liegen. Die von den Werkzeugen 21 bei ihrem Umlauf an ihrer nachlaufenden Kante hervorgerufene Saugwirkung unterstützt die Absaugung der flüchtigen Substanzen durch die Durchbrüche 36 nach oben. Die Achsen der Durchbrüche 36 können vertikal liegen, es ist jedoch zweckmäßiger, diese Achsen 38 (Fig. 6) schräg anzuordnen, und zwar so, dass sie geneigt sind sowohl zur Ebene der Deckfläche 39 der Trägerscheibe 9 als auch zur Behälterachse 8. Die Neigung der Wände 40 der Durchbrüche (Winkel a, Fig. 6) liegt zweckmäßig zwischen 30 und 60°, vorzugsweise bei etwa 45°. Diese Neigung ist so gewählt, dass das Eintrittsende 41 jedes Durchbruches 36, gesehen in Umlaufrichtung der Trägerscheibe 9 (Pfeil 23) weiter vorne liegt als das Austrittsende 42. Auch diese Maßnahme unterstützt die bereits erwähnte Saugwirkung und wirkt einem direkten Durchfallen des Gutes aus dem Raum 26 durch die Durchbrüche 36 in den Raum 10 entgegen.

Weiters ist es zweckmäßig, die Durchbrüche oder zumindest einige derselben mit einer Abdeckung 28 zu versehen (Fig. 3), die den Durchbruch 36 rundum abdeckt, bis auf eine nach außen in Richtung zum Umfang 43 der Trägerscheibe 9 gerichtete bzw. radial (in Bezug auf die Achse 8) gerichtete Öffnung 35.

Die Größe, d.h. die Querschnittsfläche der Durchbrüche 36, hängt ab von der Menge der abzuführenden flüchtigen Stoffe. In der Regel ist es ausreichend, die Querschnittsfläche aller Durchbrüche 36 maximal so groß zu bemessen, wie die Querschnittsfläche aller Schnecken des mit der Austragsöffnung 15 des Behälters 1 in Strömungsverbindung stehenden Extruders bzw. der Schnecken 17.

Die Ausführungsform nach den Fig. 4 und 5 unterscheidet sich von jener nach den Fig. 1 und 2 vor allem dadurch, dass die weiteren Werkzeuge 12 nicht pendelnd aufgehängt sind, sondern starr auf einer weiteren Trägerscheibe 29 sitzen, die koaxial zur Trägerscheibe 9 angeordnet ist und über die gleiche Welle 4 zur Drehbewegung angetrieben sein kann. Dadurch kann der Rotor 7 schmäler ausgebildet werden oder als Verlängerung der Welle 4 zur Gänze entfallen. Wie bei der Ausführungsform nach den Fig. 1 und 2 sind die unteren Werkzeuge 12 auf der Höhe der Austragsöffnung 15 des Behälters 1 angeordnet, um das im Raum 10 befindliche, bearbeitete Kunststoffmaterial wirksam in die Einzugsöffnung 27 des Schneckengehäuses 16 fördern zu können.

Es ist zweckmäßig, die Temperatur des im Behälter 1 verarbeiteten Materiales zu überwachen. Hierzu ist, wie Fig. 4 zeigt, im oberen Schneidraum 26 (oberhalb der Trägerscheibe 9) eine Temperaturmesseinheit 30 und eine Kühleinrichtung 33 vorgesehen, letztere kann als Kühlmitteleindüsung ausgebildet sein. Eine ähnliche Temperaturmesseinrichtung 31 bzw. eine ähnliche Kühlmittelzuleitung 32 (Fig. 5) kann für den unterhalb der Trägerscheibe 9 liegenden Raum 10 vorgesehen sein.

Wie bereits erwähnt, kann die Abfuhr der in den oberen Schneidraum 26 eintretenden flüchtigen Substanzen durch eine Absaugung unterstützt werden. Hierzu kann, wie Fig. 4 zeigt, oberhalb der in diesem Schneidraum 26 entstehenden Mischtrombe eine Absaugeinrichtung 34 vorgesehen sein.

## Patentansprüche

1. Einrichtung zum Aufbereiten von, insbesondere thermoplastischem, Kunststoffmaterial, mit einem Aufnahmebehälter (1) für das zu bearbeitende Material, in dessen Innenraum auf einer Trägerscheibe (9) angeordnete Werkzeuge (21) vorgesehen sind, die durch eine in den Innenraum hineingeführte Welle (4) zum Umlauf um die, insbesondere vertikale, Achse (8) der Welle (4) angetrieben sind, und mit zumindest einer Schnecke (17) zum Abtransport des Materiales aus dem Aufnahmebehälter(1), wobei das Schneckengehäuse (16) eine Einzugsöffnung (27) aufweist, die in Strömungsverbindung steht mit einer Austragsöffnung (15) des Aufnahmebehälters (1), die tiefer liegt als die Trägerscheibe (9) und die von ihr getragenen Werkzeuge (21), und wobei im Aufnahmebehälter (1) unterhalb der Trägerscheibe (9) weitere bewegte Werkzeuge (12) vorgesehen sind, die das Material in die Austragsöffnung (15) fördern, **dadurch gekennzeichnet, dass** die Trägerscheibe (9) zumindest einen nahe der Achse (8) und nahe den beim Umlauf der Trägerscheibe (9) nachlaufenden Rändern (37) der Werkzeuge (21) angeordneten Durchbruch (36) aufweist, welcher den Raum (26) ober der Trägerscheibe (9) mit dem Raum (10) unter ihr verbindet.

2. Vorrichtung nach Anspruch 1, **dadurch gekennzeichnet, dass** zumindest einer der Durchbrüche (36) Wände (40) hat, die zur Richtung der Achse (8) und zur Ebene der Trägerscheibe (9) geneigt verlaufen.

3. Vorrichtung nach einem der Ansprüche 1 oder 2, **dadurch gekennzeichnet, dass** zumindest einem der Durchbrüche (36) eine Abdeckung (28) zugeordnet ist, welche den Durchbruch (36) rundum bis auf eine zum Umfang (43) der Trägerscheibe (9) weisende Öffnung (35) abdeckt.

4. Vorrichtung nach einem der Ansprüche 1 bis 3, **dadurch gekennzeichnet, dass** die Durchbrüche (36) kreisförmigen Querschnitt haben.

5. Vorrichtung nach einem der Ansprüche 1 bis 4, **dadurch gekennzeichnet, dass** die Querschnittsfläche aller Durchbrüche (36) maximal so groß ist wie die Querschnittsfläche aller Schnecken (17) eines mit der Austragsöffnung (15) in Strömungsverbindung stehenden Extruders.

6. Vorrichtung nach einem der Ansprüche 1 bis 5, **dadurch gekennzeichnet, dass** die im Raum (10) unter der Trägerscheibe (9) befindlichen weiteren bewegten Werkzeuge (12) schwenkbar an der Trägerscheibe (9) oder an der Welle (4) aufgehängt sind und/oder fest auf einer unter der Trägerscheibe (9) angeordneten weiteren Trägerscheibe (29) sitzen.

7. Vorrichtung nach Anspruch 6, **dadurch gekennzeichnet, dass** die weiteren Werkzeuge (12) als reine Mischwerke oder mit Schneiden als Zerkleinerungswerkzeuge ausgebildet sind.

8. Vorrichtung nach einem der Ansprüche 1 bis 7, **dadurch gekennzeichnet, dass** für den Raum (26) oberhalb der Trägerscheibe (9) eine Temperaturmesseinrichtung (30) und eine Kühleinrichtung (33), insbesondere eine Kühlmitteleindüsung, vorgesehen ist.

9. Vorrichtung nach einem der Ansprüche 1 bis 7, **dadurch gekennzeichnet, dass** für den Raum (10) unterhalb der Trägerscheibe (9) eine Temperaturmesseinrichtung (31) und eine Kühleinrichtung, insbesondere eine Kühlmitteleindüsung (32), vorgesehen ist.

10. Vorrichtung nach einem der Ansprüche 1 bis 9, **dadurch gekennzeichnet, dass** oberhalb der von den umlaufenden Werkzeugen (21) im Aufnahmebehälter (1) hervorgerufenen Materialtrombe eine Absaugeinrichtung (34) zum Abtransport flüchtiger Substanzen vorgesehen ist.

## Claims

1. A device for the preparation of plastics material, in particular thermoplastic plastics material, with a receiving container (1) for the material to be treated, the interior of the said receiving container (1) having tools (21) provided therein which are arranged on a carrier disc (9) and which are driven by a shaft (4) inserted into the interior for rotation about the, in particular vertical, axis (8) of the shaft (4), and with at least one screw (17) for removing the material out of the receiving container (1), wherein the screw housing (16) has a feed opening (27) which is connected with respect to flow to a discharge opening (15) in the receiving container (1), which discharge opening (15) is situated at a lower level than the carrier disc (9) and the tools (21) carried by it, and wherein further moved tools (12) which convey the material into the discharge opening (15) are provided in the receiving container (1) below the carrier disc (9), **characterized in that** the carrier disc (9) comprises at least one aperture (36) which is situated close to the axis (8) and close to the trailing edges (37) of the tools (21) during the rotation of the carrier disc (9) and which connects the space (26) above the carrier disc (9) to the space (10) below it.

2. A device according to Claim 1, **characterized in that** at least one of the apertures (36) has walls (40) which extend at an inclination to the direction of the axis (8) and to the plane of the carrier disc (9).

3. A device according to one of Claims 1 or 2, **characterized in that** at least one of the apertures (36) has associated with it a cover (28) which covers the aperture (36) all round apart from an opening (35) directed towards the periphery (43) of the carrier disc (9).

4. A device according to one of Claims 1 to 3, **characterized in that** the apertures (36) have a circular cross-section.

5. A device according to one of Claims 1 to 4, **characterized in that** the cross-sectional area of all the apertures (36) is at most as large as the cross-sectional area of all the screws (17) of an extruder connected with respect to flow to the discharge opening (15).

6. A device according to one of Claims 1 to 5, **characterized in that** the further moved tools (12) situated in the space (10) below the carrier disc (9) are suspended in a pivotable manner on the carrier disc (9) or on the shaft (4) and/or are mounted in a fixed manner on a further carrier disc (29) situated below the carrier disc (9).

7. A device according to Claim 6, **characterized in that** the further tools (12) are constructed in the form of mixers only or, with cutters, as crushing tools.

8. A device according to one of Claims 1 to 7, **characterized in that** a temperature-measuring device (30) and a cooling device (33), in particular a coolant-spraying means, are provided for the space (26) above the carrier disc (9).

9. A device according to one of Claims 1 to 7, **characterized in that** a temperature-measuring device (31) and a cooling device, in particular a coolant-spraying means (32), are provided for the space (10) below the carrier disc (9).

10. A device according to one of Claims 1 to 9, **characterized in that** a suction device (34) for removing volatile substances is provided above the cone of material formed by the rotating tools (21) in the receiving container (1).

## Revendications

1. Dispositif pour traiter une matière plastique, notamment thermoplastique, comprenant un récipient (1) destiné à recevoir le matériau à traiter, à l'intérieur duquel sont prévus des outils (21) disposés sur un disque support (9) et qui, par l'intermédiaire d'un arbre (4) pénétrant à l'intérieur dudit récipient, sont entraînés en rotation autour de l'axe (8), notamment vertical, de l'arbre (4), ledit dispositif comprenant au moins une vis sans fin (17) pour évacuer le matériau hors du récipient (1), le carter (16) de la vis sans fin présentant un orifice d'admission (27) raccordé à un orifice d'évacuation (15) du récipient (1) situé plus bas que le disque support (9) et les outils (21) que ce dernier supporte, d'autres outils mobiles (12) étant prévus dans le récipient (1) au-dessous du disque support (9) pour refouler le matériau vers l'orifice d'évacuation (15), **caractérisé en ce que** le disque support (9) présente au moins un évidement (36) près de l'axe (8) et près des bords arrière (37) des outils (21) vus dans le sens de rotation du disque support (9), lequel ou lesquels évidements (36) relient l'espace (26) situé au-dessus du disque support (9) à l'espace (10) situé au-dessous de celui-ci.

2. Dispositif selon la revendication 1, **caractérisé en ce qu'**au moins l'un des évidements (36) présente des parois (40) inclinées par rapport à la direction de l'axe (8) et au plan du disque support (9).

3. Dispositif selon la revendication 1 ou la revendication 2, **caractérisé en ce qu'**à au moins l'un des évidements (36) est associé un élément de recouvrement (28) qui entoure l'évidement (36) de tous côtés à l'exception d'une ouverture (35) en regard de la périphérie (43) du disque support (9).

4. Dispositif selon l'une quelconque des revendications 1 à 3, **caractérisé en ce que** les évidements (36) ont une section transversale circulaire.

5. Dispositif selon l'une quelconque des revendications 1 à 4, **caractérisé en ce que** l'aire de la section de tous les évidements (36) est inférieure ou égale à l'aire de la section de toutes les vis sans fin (17) d'une extrudeuse raccordée à l'orifice d'évacuation (15).

6. Dispositif selon l'une quelconque des revendications 1 à 5, **caractérisé en ce que** les autres outils mobiles (12) agencés dans l'espace (10) situé sous le disque support (9) sont suspendus au disque support (9) ou à l'arbre (4) avec capacité de pivotement et/ou sont montés fixement sur un autre disque support (29) prévu sous le disque support (9).

7. Dispositif selon la revendication 6, **caractérisé en ce que** les autres outils (12) sont conçus comme de simples outils de mélangeage ou, dotés d'arêtes vives, comme des outils de broyage.

8. Dispositif selon l'une quelconque des revendications 1 à 7, **caractérisé en ce qu'**un dispositif de mesure de température (30) et un dispositif de refroidissement (33), notamment un moyen d'injection de produit de refroidissement, sont prévus pour l'espace (26) situé au-dessus du disque support (9).

9. Dispositif selon l'une quelconque des revendications 1 à 7, **caractérisé en ce qu'**un dispositif de mesure de température (31) et un dispositif de refroidissement, notamment un moyen d'injection (32) de produit de refroidissement, sont prévus pour l'espace (10) situé au-dessous du disque support (9).

10. Dispositif selon l'une quelconque des revendications 1 à 9, **caractérisé en ce qu'**un dispositif d'aspiration (34) est prévu pour évacuer les substances volatiles au-dessus du tourbillon de matériau provoqué dans le récipient (1) par les outils rotatifs (21).
